# EUROPEAN PATENT SPECIFICATION

(11) **EP 1 058 700 B1**
(45) Date of publication and mention of the grant of the patent: **02.05.2003**
(21) Application number: 99936082.9
(22) Date of filing: 26.02.1999
(51) Int. Cl.: C08F 283/01, C09J 167/06, C09J 175/16, C09J 163/10, C08K 5/14

(54) **CATALYST COMPOSITION**
KATALYSATORZUSAMMENSETZUNG
COMPOSITION CATALYTIQUE

(30) Priority: 27.02.1998 GB 9804295
(43) Date of publication of application: 13.12.2000
(73) Proprietor: SCOTT BADER COMPANY LIMITED, Wellingborough, Northamptonshire NN29 7RL (GB)
(72) Inventor: WOOD, Anthony, Raymond, Woodford, Northamptonshire NN14 4HQ (GB)
(74) Representative: Coleiro, Raymond
(86) International application number: GB9900597
(87) International publication number: WO99043726

(56) References cited:
- EP-A- 0 343 747
- EP-A- 0 368 415
- DE-A- 4 304 824
- DATABASE WPI Section Ch, Week 8901 Derwent Publications Ltd., London, GB; Class A23, AN 89-004501 XP002104731 & JP 63 284256 A (KAYAKU NOURY KK) , 21 November 1988

## Description

This invention relates to catalyst compositions for curing a free radical curable resin composition, to a two-pack kit for providing a free radical curable resin composition containing a free radical catalyst and to the use of such a catalyst composition in curing free radical curable resin compositions.

For safety reasons, catalysts capable of generating free radicals (hereinafter referred to as "free radical catalysts") cannot be transported as pure materials. They are therefore supplied as catalyst compositions containing active catalyst and a diluent. Typically, in one commercially available grade, 50% by weight of benzoyl peroxide is admixed with 50% by weight of liquid diisobutyl phthalate, while in another grade, the benzoyl peroxide is coated with solid cyclohexyl phthalate.

However, it is believed that such compounds as diisobutyl phthalate are oestrogenic and may present a medical hazard.

Moreover, other peroxides such as methyl ethyl ketone peroxide are at present commercially available only in compositions containing, for example, dimethyl phthalate, as stabilising diluent. Since such compositions are of particularly low viscosity, they present a danger in spillage during transportation.

We have found surprisingly that a composition containing a liquid saturated polyester, as defined'below, avoids the above problems and yet provides particularly excellent results in curing free radical curable polymers in a wide range of applications.

According to one aspect, the invention provides a catalyst composition for curing a free radical curable resin composition, which catalyst composition is free from free radical curable resin and comprises:
(1) a free radical catalyst and
(2) a liquid saturated polyester
   (a) comprising units derived from
      (i) a C₃₋₁₂ polycarboxylic acid or reactive derivative thereof; and
      (ii) a C₂₋₁₂ polyol or reactive derivative thereof; and
   (b) having a weight average molecular weight of from 500 to 20,000, preferably, from 1,000 to 15,000, more preferably from 2,000 to 10,000.

The acid component of the liquid saturated polyester is a C₃₋₁₂, preferably C₄₋₈, polycarboxylic acid, more preferably a dicarboxylic acid, or reactive derivative thereof and is typically derived from at least one of adipic, succinic, azelaic, terephthalic, o-phthalic, isophthalic, malonic, glutaric, pimelic, suberic, sebacic, hemimellitic, trimellitic and trimesic acids and reactive derivatives thereof.

The glycol component is a C₂₋₁₂, preferably C₃₋₆, polyol, more preferably a diol, or reactive derivative thereof, for example, ethylene glycol, 1,2-propane diol, 1, 3-propane diol, 1,2-butane diol, 1,3-butane diol, 1,4-butane diol, 1,6-hexane diol, 1,4-cyclohexane dimethanol, diethylene glycol and polyethylene glycol having up to 12 carbon atoms.

A typical example of the liquid saturated polyester is poly(1,3-butane diol adipate), which preferably has a weight overage molecular weight of 5,000 - 6,000.

The viscosity of the liquid saturated polyester will depend upon the purpose of application and the composition may be water thin or have a viscosity of a thick paste.

The particular choice of saturated polyester will depend upon its compatibility with the resin composition to be cured.

An especially preferred example is a polymer of 1,3-butanediol adipate having a weight average molecular weight Mw of 5162, a number average molecular weight Mn of 2369 and a Z-average molecular weight Mz of 8304, when determined by gel permeation chromatography (GPC) using a polystyrene calibration standard in tetrahydrofuran. Products such as this are commercially available and are recommended for use as plasticisers with PVC etc.

The active catalyst may be any compound capable of generating free radicals for curing the free radical curable resin composition, usually in the presence of an accelerator present in the resin composition.

The choice of catalyst will depend upon the purpose of application. They are usually organic peroxide compounds, examples of which are ketone peroxides such as methyl ethyl ketone peroxide, cyclohexanone peroxide, methyl isobutyl ketone peroxide, acetyl acetone peroxide and diacetone alcohol peroxide, aryloyl and alkanoyl peroxides such as benzoyl peroxide (sometimes called "dibenzoyl peroxide") and acetyl peroxide, peresters such as tert. butyl peroxy-2-ethyl hexanoate and tert. butyl peroxy benzoate and perketals such as 1,1-bis(tert. butyl peroxy) cyclohexane and 1,1-bis(tert, butyl peroxy) 3,3,5-trimethyl cyclohexane and mixtures of these. Such catalysts are usually applied in the presence of an accelerator. For example, methyl ethyl ketone peroxide is usually applied in the presence of a metallic salt such as cobalt octoate or cobalt naphthenate, while benzoyl peroxide is usually applied in the presence of an amine accelerator such as a primary amine, for example, dimethyl or diethyl aniline, and may also be used with, especially, an epoxy p-toluidine adduct, such benzoyl peroxide-amine accelerator systems giving, for many applications, especially adhesive and gap filling applications, a quicker gel time with a more rapid development of through cure.

A general purpose advantage to be gained by the use of a catalyst composition according to the invention is that the use, as a catalyst carrier, of the liquid saturated polyester allows replacement of conventional diluents, especially stabilising diluents (sometimes called "phlegmatisers") present in commercially available catalyst compositions.

Such a liquid saturated polyester can be selected so as to be particularly compatible with the unsaturated polymer resin to be catalysed. This allows considerable dilution of the active catalyst where appropriate. This in turn allows particularly efficient and uniform mixing of the active catalyst within the resin and allows relatively small concentrations of active catalyst to be used without fear of non-uniform distribution in the resin. This allows a clear correlation to be made between amount of active catalyst employed and expected gel time. It thus becomes possible by adjustment of the concentration of active catalyst in the catalyst composition to fine tune the gel time. This provides an alternative or additional means of control to that of adjusting accelerator concentration.

The use of a liquid saturated polyester as stabilising diluent avoids the need to use potentially harmful chemicals such as diisobutyl phthalate. Moreover, when a polyester of somewhat-higher viscosity is employed, this can reduce spillage and other disadvantages associated with low viscosity carriers. In addition, the polyester is compatible with a wide range of ethylenically unsaturated free radical curable resin compositions.

The proportional amount of active catalyst in the catalyst composition prior to its incorporation into a free radical curable resin composition will depend upon the purpose of application and may vary from as low as 0.5 up to 60% by weight of the total composition.

Moreover, for some applications, it is not necessary to replace the conventional diluent present in a commercially available catalyst composition; rather, for applications where a more dilute catalyst composition is desirable than the 50% active compositions generally supplied for some catalysts, the further diluent may be provided by the liquid saturated polyester. An example of this is when using an applicator as described below, in which case the proportional amount of active catalyst in the catalyst composition is preferably from 2 to 25%, more preferably 5 to 20%, especially by 5 to 15% by weight of total catalyst composition.

Thus, in general, according to another aspect, the invention provides the use, for curing a free radical curable resin composition, of a catalyst composition which, before use, is free from free radical curable resin and comprises a free radical catalyst and a liquid saturated polyester as defined above.

The free radical curable resin composition for which the catalyst composition may be used may comprise an unsaturated polymer, especially an ethylenically unsaturated polymer, and may additionally comprise a cross-linkable monomer and any other conventional additive in dependence upon the purpose of application.

Typical unsaturated polymers are, for example, unsaturated polyesters such as those made by reaction of one or more glycols with an unsaturated dicarboxylic acid or its anhydride or with a mixture of the unsaturated acid or its anhydride with a saturated dicarboxylic acid or its anhydride. Optionally, minor amounts of alcohols, polyols, monobasic or polybasic acids may be incorporated in the reaction mixtures from which the unsaturated polyesters are made, which reaction mixtures may also include dicyclopentadiene to modify the polyesters.

Other unsaturated polymers which can be made into resin compositions in accordance with the invention using these techniques are vinyl ester polymers (which may be prepared by reaction of acrylic or methacrylic acid with epoxy resins) and urethane acrylate polymers, especially acrylate terminated polyurethanes.

For most applications, the unsaturated polymer is dissolved or dispersed in a cross-linkable monomer capable of copolymerising with the ethylenically unsaturated polymer and such a cross-linking agent may be any suitable vinyl monomer such as styrene, vinyl toluene, p-methyl styrene, chlorostyrene, t-butyl styrene, methyl methacrylate, a glycol diacrylate or diallyl phthalate.

The cross-linking agent is preferably present in an amount of from 25-50%, more preferably from 30-40%, inclusive by weight of the total resin content, including unsaturated polymer, cross-linking agent and liquid saturated polyester.

Such unsaturated polymers, especially polyesters, vinyl esters and urethane acrylate polymers, can be employed in moulding, for example, in compression moulding using compositions such as dough moulding compounds (DMC), bulk moulding compounds (BMC), thick moulding compounds (TMC) and sheet moulding compounds (SMC), injection moulding, including resin injection moulding (RIM), e.g. reinforced resin injection moulding (RRIM), and vacuum injection moulding and transfer moulding, especially resin transfer moulding (RTM), traditional fibre reinforced plastics (FRP), more especially glass reinforced plastics (GRP), moulding, in pultrusion, hand lamination (including spray applications) and as adhesives, gap fillers such as body fillers, sealants and caulks and rock anchors.

They can also be employed so as to provide particular advantages in application of adhesive compositions, especially industrial adhesive applications, where facility and speed of application is of particular importance.

According to another aspect, the invention provides a two-pack kit for providing a free radical curable resin composition containing a free radical catalyst, which kit comprises a first pack containing a catalyst composition and a second pack containing a resin composition,
the said catalyst composition being a catalyst composition as defined above and the said resin composition being a free radical curable resin composition free from free radical catalyst, and
the said liquid saturated polyester of the said catalyst composition being present, in the two-pack kit, in an amount, by weight of the total weight of the liquid saturated polyester in the first pack and resin component of the said resin composition in the second pack, of from 0.5 to 15 weight %.

Most conveniently, the two-part kit may take the form of an applicator for simultaneous application of the said catalyst and resin compositions from the said respective first and second packs, which applicator comprises a cartridge and which cartridge comprises:
a first piston casing defining a first chamber providing the first pack containing the said catalyst composition,
a second piston casing longitudinally coextensive with the first piston casing and defining a second chamber providing the second pack containing the said resin composition, separately from the catalyst composition,
each of the said first and second piston casings being closed at a respective axial end thereof defining a closed axial end of the cartridge but having at the said closed axial ends respective apertures for allowing egress of the said catalyst and resin compositions from the respective first and second chambers,
the applicator additionally comprising a pair of piston elements each associated with a respective one of the said first and second chambers and disposed at a respective axial end thereof remote from the said closed axial end to force the said catalyst and resin compositions out of the said first and second chambers through the said apertures.

Preferably, the first piston casing is a hollow pipe defining the first chamber and the second piston casing is an outer housing within which housing the hollow pipe is disposed longitudinally relative to the housing, the outer housing and hollow pipe thereby defining together the second chamber.

Most conveniently, the applicator may additionally comprise a mixing chamber in fluid connection with each of the apertures provided at the respective closed axial ends of the first and second piston casings to allow mixing of the catalyst and resin composition prior to dispensation thereof.

The mixing chamber is preferably disposable, so that the remainder of the applicator can be employed for subsequent application after a new mixing chamber is secured over the respective apertures, for example by screw threaded engagement with a tap end projecting from the apertured axial end of the cartridge.

The mixing chamber may have a profiled internal periphery, such as a screw spiral, to assist in the mixing process.

A typical applicator, which is commercially available, consists of a dispenser which takes the form of a cradle holding the cartridge and an activator piston plunger which can be locked into a pre-dispensing position, but which can be released so as to advance as a result of actuation of a hand grip. Each of the first and second piston casings carries respectively a central dispensing piston and a concentric dispensing ring movable within the respective first and second casings to eject the catalyst and resin compositions respectively.

The plunger is fitted at its axial end adjacent to the piston casings with a metal rod which engages the dispensing piston of the first piston casing and a concentric ring which engages with the concentric dispensing ring providing the piston of the second chamber.

Thus, on application of the hand grip, the plunger pushes both pistons an equal distance into respective piston chambers of the cartridge, thus ejecting into the mixing chamber the relative volumes in the respective first and second piston chambers, which are directly proportional to the respective surface areas of the two piston chambers.

It is found that compositions present in such cartridges have excellent storage stability.

When the composition is to be applied as an adhesive or as a gap filler such as a sealant or caulking compound, the applicator also allows particularly efficient mixing of the catalyst composition with the resin component, which is thixotropic, i.e. has a pseudo-plastic profile of viscosity versus shear, but with a recovery time. In other words, when shear is applied, viscosity falls, while when shear is removed, after a delay, viscosity recovers to its original value.

For effective mixing (and cartridge manufacture), it is preferred that the effective maximum volume ratio of resin composition: catalyst composition is 20:1, more preferably 1:1 to 15:1, still more preferably from 5:1 to 10:1, especially 10:1.

It is also preferred that the resin and catalyst compositions have respective viscosities similar to one another to improve blending.

The proportion of active catalyst to total of unsaturated polymer, any cross-linking agent in the unsaturated polymer and liquid saturated polyester in the final composition will usually be about 0.5-1.5, especially about 1% by weight.

When a two-part kit embodying the invention is employed, the active catalyst will be present in the catalyst composition and any accelerator will be present in the resin composition.

As indicated above, it is possible to replace in entirety conventional diluents, such as stabilising diluents present in commercially available catalyst compositions, with the liquid saturated polyester present in a composition in accordance with the invention. However, in the above application, there are still considerable advantages to be gained from the above mentioned cartridge application, even if the active . catalyst employed is say, two parts by volume of a 50% active catalyst composition, this being diluted with the saturated polyester (and optionally filler material) to provide ten parts catalyst composition within the dispenser. Nevertheless, even for such applications, it may be preferable to avoid the presence of liquid diluents other than the liquid saturated polyester present in a composition embodying the invention.

In contrast to such a composition, it was found that when, in order to satisfy the requirements for cartridge application, a conventional diluent, for example, diisobutyl phthalate, was merely applied in larger quantities (instead of the saturated polyester), the properties of the cured product were severely impaired as compared with those of a product prepared using a catalyst composition in accordance with the invention.

We find that a catalyst composition in accordance with the invention provides particularly excellent results when employed together with an adhesive composition, in which the unsaturated polymer is an acrylate terminated polyurethane, poly(vinyl ester) or unsaturated polyester.

Acrylate terminated polyurethanes, in particular, are especially useful as adhesives for use during the construction of structures such as boats and ships moulded from fibre-reinforced unsaturated polyesters, especially where deck and superstructure or ribs or bulkheads need to be bonded to or within the hull.

Such an adhesive application either between a deck and rib placed on it or along longitudinal edges where the deck and rib meet are particularly well applied using the above mentioned dispenser.

In another alternative application, such acrylate terminated polyurethanes can be blended with polyester in layers of a laminate near the weakest point of a bond between such structural elements to be connected. This gives the joints sufficient flexibility to withstand sudden stresses or shocks without rupture.

Especially for laminating applications, a composition containing methyl ethyl ketone peroxide in a liquid polyester, in accordance with the invention, provides excellent results.

For adhesive use in general, excellent results are also achieved using benzoyl peroxide as a catalyst. This is available commercially as a 50% by weight active mixture with, for example, diisobutyl phthalate as a diluent (commercially available as BT50 from Akzo). Even before admixture with the saturated polyester, this catalyst takes the form of a paste. Satisfactory results were obtained by diluting the paste with the saturated polyester.

An alternative commercially available composition is a powder consisting of 50% by weight active benzoyl peroxide catalyst coated with cyclohexyl phthalate which, before mixture with the liquid saturated polyester present in the composition embodying the invention, is crystalline.

When diluted by addition of a conventional diisobutyl phthalate to provide a composition containing 10% active catalyst suitable for application by a dispenser the resultant adhesive had poor through cure. On the other hand, when diluted to the same extent with the liquid saturated polyester in accordance with the invention, this product gave particularly excellent cured adhesives.

In addition to application from a cartridge as an adhesive, the composition, containing in admixture a catalyst component supplied from the first piston casing and a resin composition supplied from the second piston casing, is equally applicable from a cartridge when applied as a body stopper.

Thus, professional car bodywork specialists are calling for a cartridge approach, where a single composition is applied, to eliminate the need for blending tins of catalyst with kegs of body stopper. This also avoids variation in catalyst quantity due to poor mixing.

Currently, such compositions contain large quantities of monomeric phthalate plasticiser, which shows slow bodystopper cure and has an adverse effect upon the final cured resin properties, e.g. reduced substrate adhesion, hardness and sandability.

A composition embodying the invention avoids such difficulties.

Particularly preferred embodiments of the invention will now be described with reference to the following Examples, in which parts are by weight unless otherwise stated, and with reference to the accompanying drawings, in which:

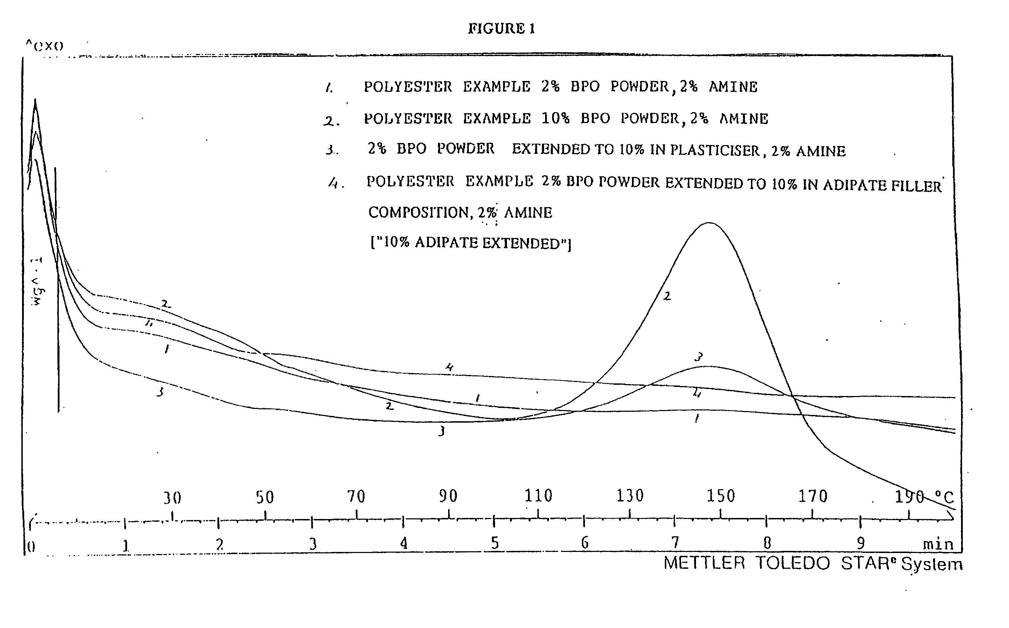

Figs.1-4 are respective traces obtained using a Differential Scanning Calorimeter (DSC) as described in Examples 2-5 respectively. A Mettler Toledo Calorimeter was employed. Each of Figures 1, 3 and 4 contains a plurality of traces each taken separately but superimposed for comparison. Each of the tracings in Figs.1-4 was taken after an initial room temperature cure for 24 hours. After curing, the sample was cooled to 0°C and then heated to provide an increase in temperature of 20°C/rising up to 200°C over 10 minutes, as indicated by the x-axis. The signal represented by the y-axis is that after adjustment for the weight of the sample. An exothermic peak indicates a further cure, showing that the initial curing did not result in a full cure.

### EXAMPLE 1.

### A. Catalyst composition

| | | |
|---|---|---|
| (1) | Catalyst component - dibenzoyl peroxide (50% active catalyst in cyclohexyl phthalate, commercially available as Lucidol CH 50X); | 13.5 |
| (2) | Polymer of 1,3-butanediol adipate having a weight average molecular weight, Mw, of 5162, a number average molecular weight, Mn, of 2369 and a Z-average molecular weight, M_{Z}, of 8304, when determined by gel permeation chromatography (GPC) using a polystyrene calibration standard in THF; | 36.0 |
| (3) | Filler - Titanium dioxide(commercially available as TR81); | 50 |
| (4) | Thixotrope - Fumed silica (commercially available as Wacker N 20). | 0.5 |

### B. Preparation of Catalyst Composition

Components (1) and (2) were mixed together and thereafter components (3) and (4) were added and mixed with components (1) and (2) to form a pumpable suspension using a high shear mixer equipped with a coolant water jacket to ensure that the temperature did not rise above 25°C during mixing.

### C. Resin Composition

| | | |
|---|---|---|
| (1) | Resin solution - Unsaturated polyester dissolved in styrene (see below) | 100 |
| (2) | Amine accelerator - Epoxy p-toluidine | 1* |
| (3) | Thixotrope - Fumed silica (commercially available as Wacker N 20) | 2.5 |
| (4) | Styrene volatility suppressant - a wax (commercially available as BYK S750) | 1.5 |

| | | |
|---|---|---|
| *Tests were also carried out using 2% of amine accelerator. | | |

### D. Preparation of Resin Solution

The unsaturated polyester was a two-stage resin prepared from the following components:-

| | | |
|---|---|---|
| 1st stage component: | Isophthalic acid | 1.49 moles |
| | Diethylene glycol | 2.68 moles |
| | Propylene glycol | 0.37 moles |
| 2nd stage component: | Maleic anhydride | 1.49 moles |

The first stage components were reacted to a maximum of 230°C until an acid value of 30±3 was achieved.

In the second stage, the maleic anhydride was reacted to a maximum temperature of 225°C until an acid value of 32±1 was achieved. At this point the usual stabilisers/inhibitors were added and the resin cooled and diluted with styrene to give a resin/styrene ratio of 68/32. The final acid value was between 18 and 22 mg KOH/g and the Shirley Ferranti A Cone viscosity at a shear of 37.35 sec⁻¹ was 8.5 - 10.5 poise. Note: a slight excess of glycol over acid was used to allow for small losses thereof carried over as distillate with the water liberated by the reaction process.

### E. Preparation of Resin Composition

The resin solution prepared above was blended (as component (1) in Part C above) with components (2) and (3) to form a bulk composition. Blending was carried out using a high shear Torrance mixer and then component (4) was added.

### F. Application

The catalyst composition, prepared as in Part B above and given in Part A, was introduced into a first, inner chamber of an applicator having a two-part cartridge as previously described and the bulk resin composition, prepared as in Part E above and given in Part C, was introduced into a second, outer chamber of the two-part cartridge, the inner and outer chambers being concentric with one another. The ratio, by volume, of resin composition in the outer chamber: catalyst composition in the inner chamber was 10:1. A piston of the applicator was then actuated to force the respective catalyst and resin compositions into a common mixing chamber and out through a nozzle exit of the mixing chamber.

### G. Results

### (a) Curing Properties

**Table 1**

| | 1% AMINE | 2% AMINE |
|---|---|---|
| GEL TIME AT AMBIENT 21°C | 25-30 MINUTES | 5-10 MINUTES |
| TOUCH DRY | 85-90 MINUTES | 65-70 MINUTES |

As can be seen from Table 1, the amine content strongly affects the gel time but has a somewhat lesser effect upon the touch dry time.

### (b) Adhesive Properties

To test the composition's adhesive properties lap shear strengths were carried out according to the method of BS 4994.

After four hours (adhesive) failure was recorded as being an average of 8.3 MPa. No improvement was noted if samples are tested after twenty-four hours, indicating that full cure is achieved after four hours.

In addition to its use as an adhesive, this catalyst-containing resin composition may also be used in a gap filling/caulking type application.

### (c) Stability Test

In a stability test, a cartridge, as in Part F above, was again filled with a catalyst composition, given in Part A above, in the inner chamber and a resin composition in the outer chamber.

The cartridge was held at 30°C for six weeks, after which there was no noticeable degradation of a catalyst composition therein, in that the catalyst composition was still usable and, after activation, had unchanged gel times and cure characteristics as compared with those measured six weeks earlier.

### Example 2

Using the same catalyst composition (containing catalyst, saturated polyester, filler and thixotrope) and resin composition as in Example 1, including the same amine accelerator (epoxy p-toluidine), but at a concentration of 2%, as opposed to 1%, by weight of Resin Composition C, a curable unsaturated polyester resin composition was prepared by blending together the respective catalyst and resin compositions. The resultant curable composition was then allowed to cure for 24 hours at ambient temperature. A portion of the cured composition was subjected to a Shore Hardness D test, then post-cured for 3 hours at 80°C and then subjected again to the Shore Hardness D test. The results are shown in Table 2 below, in which the catalyst composition is referred to as a 2% CH5OX:ADIPATE/FILLER(1:4) catalyst.

Another portion of the above composition which had been allowed to cure for 24 hours (but not post-cured) was subjected to DSC as previously described and the tracing is shown in Fig.1 (tracing 4). Here the composition is referred to as a "10% adipate extended" catalyst.

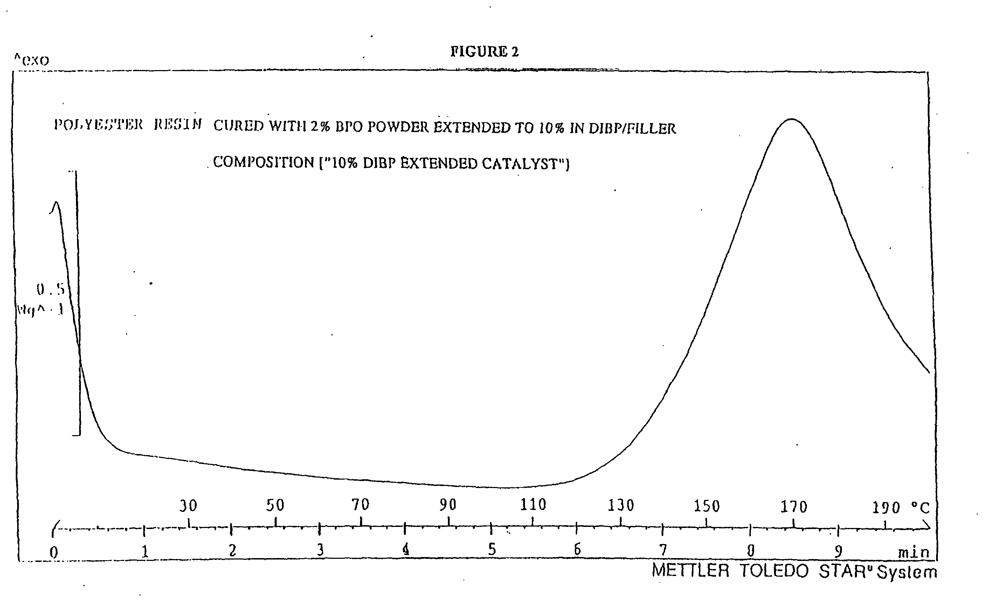

For comparison, the same unsaturated polyester resin composition as that of Example 1 and above was admixed with different respective catalyst compositions and the resulting curable unsaturated polyester resin compositions allowed to cure for 24 hours as above. The cured compositions were then subjected to the same tests as described above. The respective catalyst compositions were:
2% Lucidol CH5OX, referred to in Table 2 as "2% CH5OX" and in Fig.1 as "2% BPO powder" (tracing 1);
10% Lucidol CH5OX, referred to in Table 2 as "10% CH5OX" and in Fig.1 as "10% BPO Powder" (tracing 2);
2% Lucidol CH5OX "extended" to a 10% composition with a diisobutyl phthalate plasticiser (containing no filler), referred to in Table 2 as "2% CH50X:phthalate (1:4)" and in Fig.1 as "2% BPO Powder extended to 10% in plasticiser"; and
2% Lucidol CH5OX extended to a 10% composition with the same composition as in Example 1 (including the same proportional amounts of filler and thixotrope but replacing the saturated polyester with an equivalent amount of diisobutyl phthalate) referred to in Table 2 as "2% CH5OX:phthalate/filler(1:4)" and in Fig.2 as "10% DIBP extended catalyst",

These % values are based on the amount of catalyst composition by weight of the resin composition to be cured, excluding the catalyst composition itself. Although the catalyst composition containing the plasticiser was in fact extended by dilution of 2% CH5OX in plasticiser in a volume ratio of 1:4, the % of catalyst composition still amounts approximately to 10% by weight of resin composition.

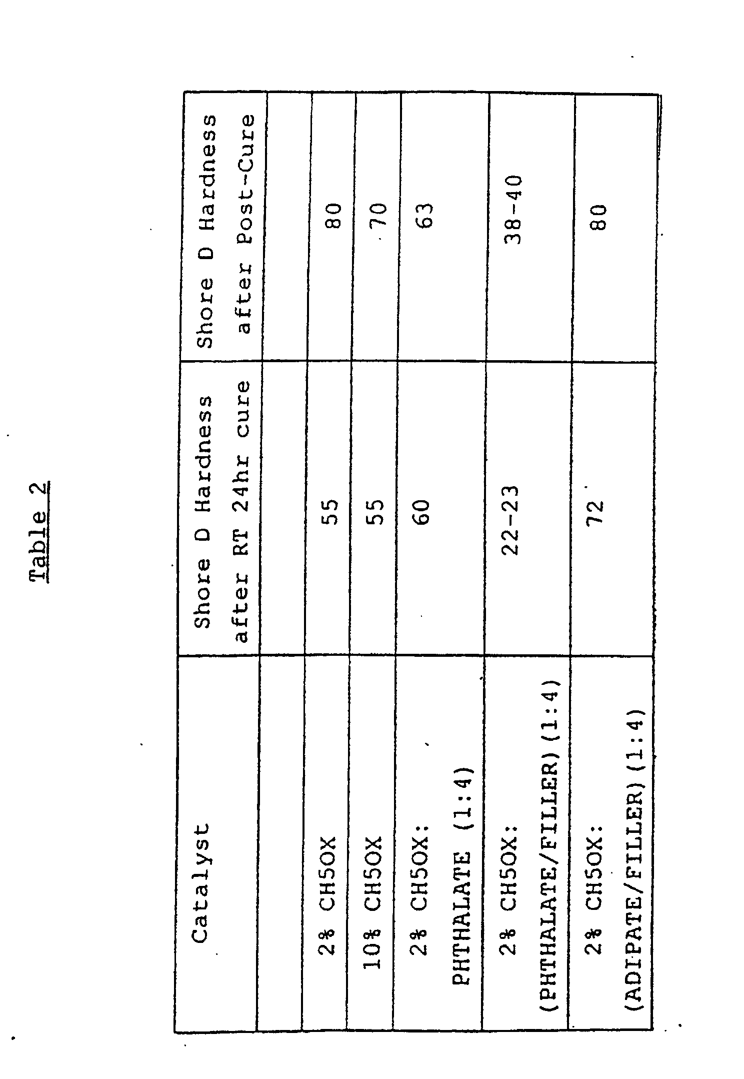

The above Shore D hardening rate shows the superior short term performance of the 2% CH5OX:ADIPATE (1:4) catalyst embodying the invention. Moreover, even following post-cure, only the standard 2% CH5OX composition achieved the same level of *cure.* All other attempts to adjust the mix ratio led to reduced hardness.

As shown in Figs.1 and 2, this resulted from an incomplete cure. More particularly, the results were as follows:
Fig.1 (Curve 1) - Polyester cured with 2% BPO Powder with 2% Amine. No residual reactivity, indicating complete cure.
Fig.1 (Curve 2) - Polyester cured with 10% BPO Powder with 2% Amine. Residual reactivity indicating incomplete cure.
Fig.1 (Curve 3) - Polyester cured with 2% BPO Powder extended to 10% in diisobutyl phthalate (DIBP) Plasticiser with 2% Amine. Residual reactivity, indicating incomplete cure.
Fig.1 (Curve 4) - Polyester cured with 2% BPO Powder extended to 10% with adipate/filler composition with 2% Amine. No residual reactivity, indicating complete cure.
Fig.2 - Polyester cured with 2% BPO Powder extended to 10% with DIBP/filler composition. Residual reactivity, indicating incomplete cure.

From the above, the respective ΔH values were calculated and are shown in Table 3. As is clear from the above, the higher the ΔH value, the more incomplete the cure after 24 hours.

**Table 3**

| Catalyst | Tracing | ΔH(J/g) |
|---|---|---|
| | | |
| 2% CH5OX | Fig.1 (Curve 1) | 0.32 |
| 10% CH5OX | Fig.1 (Curve 2) | 36.5 |
| 2% CH5OX: PHTHAIATE (1:4) | Fig.1 (Curve 3) | 13.2 |
| 2% CH5OX: PHTHALATE/FILLER (1:4) | Fig.2 | 93 |
| 2% CH5OX: ADIPATE/FILLER(1:4) | Fig.1 (Curve 4) | 0.1 |

It is to be noted that the above DSC traces *are* most appropriate for indicating a high degree of incomplete curing prior to the DSC treatment. Thus, below a certain level of heat given off, they are not so sensitive, so that small amounts of residual cure are not necessarily detected. On the other hand, even a small amount of residual cure gives a measurable increase in hardness, as detected by the above Shore D Hardness Test.

### Example 3

Using the same catalyst composition as in Example 1 and the same amine accelerator (epoxy p-toluidine), but at 2% by weight of resin composition, curable resin compositions were made up by blending, as in Example 2, using as respective resins, each of a poly(vinyl ester) and an acrylate terminated polyurethane resin. The respective resins were then allowed to cure for 24 hours. Likewise, for comparison, these resins were also cured using a standard 2% Lucidol CH5OX catalyst.

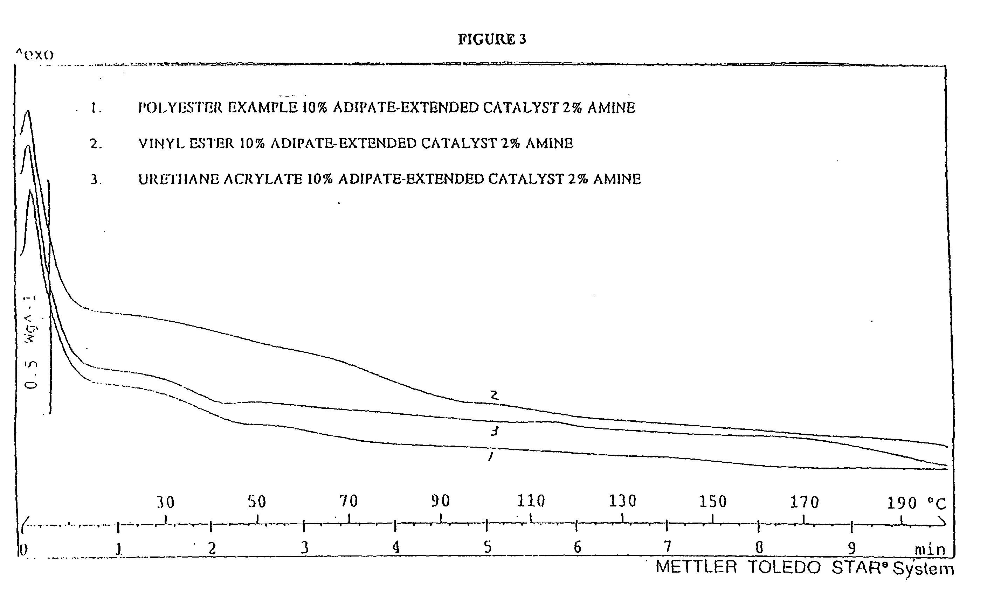

The same Shore Hardness D tests as those described in Example 2 were carried out and the results are shown in Table 4. DSC curves were also obtained, as in Example 2 for each of unsaturated polyester (trace 1), poly(vinyl ester) (trace 2) and acrylate terminated polyurethane (trace 3), as shown in Fig.3.

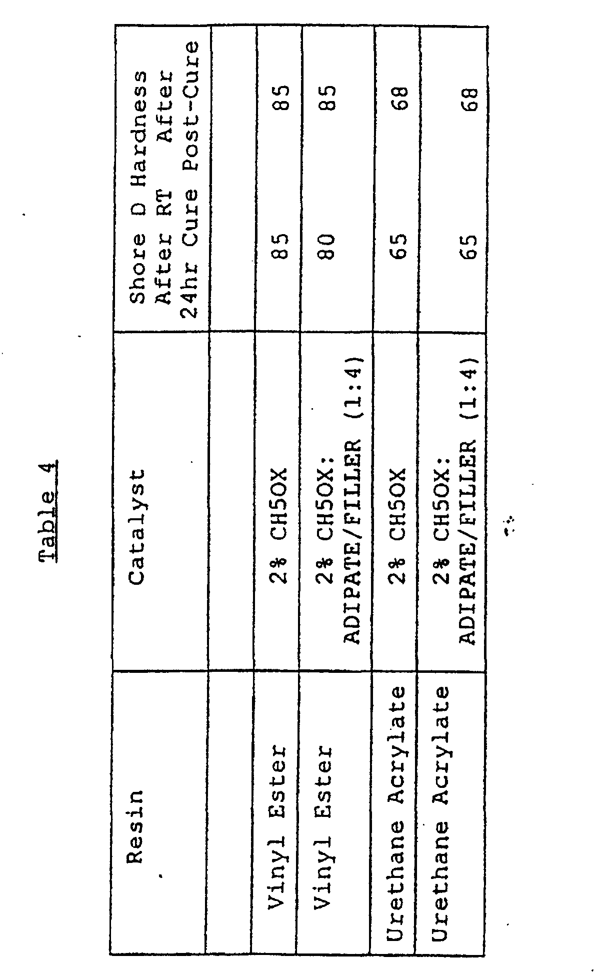

The above Shore Hardness results show that comparable results can be achieved over the same time scale, with different curable resins, as between the extended catalyst composition embodying the invention and the standard catalyst (unextended).

Likewise, tracings 1-3 in Fig.3 show that full curing occurs for each curable unsaturated resin tested, there being no residual activity.

### Example 4

The same unsaturated polyester resin composition prepared as in Example 2, but containing, as accelerator, 2% Accelerator E (see below) in place of the amine accelerator of Example 1, was cured using, as catalyst composition, a standard methyl ethyl ketone peroxide (MEKP) composition (see below) at a concentration, by weight of resin composition alone (excluding catalyst composition) of 2%.

In one experiment, a 2% catalyst composition "extended" with the saturated adipate polymer employed in Example 1, in a ratio of catalyst:adipate of 1:4 to provide a catalyst composition embodying the invention was used while in another experiment, for comparison, an unextended 2% catalyst composition was used.

The standard MEKP composition contained 50% active MEKP catalyst in dimethyl phthalate as stabilising diluent.

Accelerator E, referred to above, is a solution of cobalt octoate in styrene containing 0.4% by weight cobalt as metal.

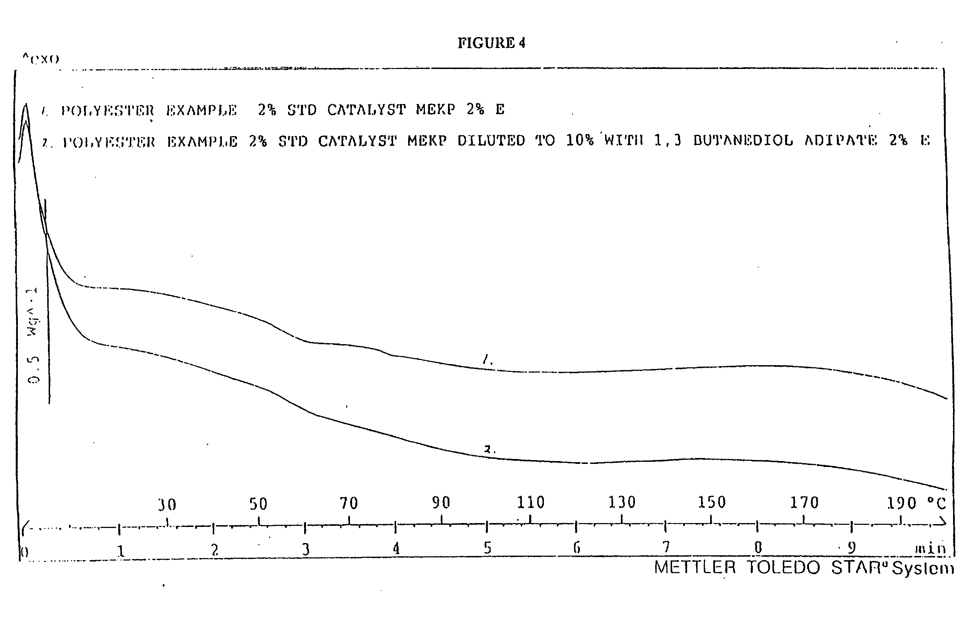

The results of DSC carried out as in Example 2 are shown in Fig.4.

The tracings obtained for the 2% standard MEKP catalyst composition, both unextended (tracing 1) and extended in accordance with the invention (tracing 2) indicate identical cure behaviour in an unsaturated polyester using both a standard and extended MEKP type catalyst. Indeed, in several tests, the unextended and extended MEKP catalyst composition exhibited near identical results in terms of cure and hardening rate, thus allowing application of a paste type MEKP that can be dispensed at a convenient ratio of catalyst composition:resin composition of, say 10:1.

From the above Examples, the conclusion can be drawn that the use of powdered benzoyl peroxide and liquid MEKP can each be adapted to form a paste type composition that cures well in various types of resin and in a variety of applications when dispensed at a convenient ratio of, say, 10:1. This offers a safe user friendly, stable catalyst that does not compromise cure, hardness or strength.

## Claims

1. A catalyst composition for curing a free radical curable resin composition, which catalyst composition is free from free radical curable resin and comprises:
(1) a free radical catalyst and
(2) a liquid saturated polyester
(a) comprising units derived from
(i) a C₃₋₁₂ polycarboxylic acid or reactive derivative thereof; and
(ii) a C₂₋₁₂ polyol or reactive derivative thereof; and
(b) having a weight average molecular weight of from 500 to 20,000.

2. A catalyst composition according to claim 1, wherein the-liquid saturated polyester has a weight average molecular weight of from 2,000 to 10,000.

3. A catalyst composition according to claim 1 or claim 2, wherein the liquid saturated polyester is a poly(1,3-butane diol adipate).

4. A catalyst composition according to claim 3, wherein the poly(1,3-butane diol adipate) has a weight average molecular weight Mw of 5,000 - 6,000.

5. A catalyst composition according to any preceding claim, wherein the catalyst is an organic peroxide or perketal.

6. A catalyst composition according to claim 5, wherein the catalyst is benzoyl peroxide.

7. A catalyst composition according to claim 5, wherein the catalyst is methyl ethyl ketone peroxide.

8. A catalyst composition according to any preceding claim, wherein the catalyst is present in the catalyst composition in an amount of from 0.5 to 60% by weight of the total catalyst composition.

9. A catalyst composition according to claim 8, wherein the catalyst is present in an amount of from 5 to 15% by weight of the total catalyst composition.

10. Use, for curing a free radical curable resin composition, of a catalyst composition which, before use, is free from free radical curable resin and comprises:-
(1) a free radical catalyst and
(2) a liquid saturated polyester
(a) comprising units derived from
(i) a C₃₋₁₂ polycarboxylic acid or reactive derivative thereof; and
(ii) a C₂₋₁₂ polyol or reactive derivative thereof; and
(b) having a weight average molecular weight of from 500 to 20,000.

11. Use according to claim 10, wherein the free radical curable resin composition comprises an ethylenically unsaturated polymer and a monomer cross-linkable therewith.

12. Use according to claim 10 or claim 11, wherein the said unsaturated polymer is an unsaturated polyester.

13. Use according to claim 10 or claim 11, wherein the said unsaturated polymer is an acrylate terminated polyurethane.

14. Use according to claim 10 or claim 11, wherein the said unsaturated polymer is a poly(vinyl ester).

15. Use according to any one of claims 11 to 14, wherein the cross-linkable monomer is styrene.

16. Use according to any one of claims 11 to 15, wherein the cross-linkable monomer is present in an amount of from 25-50% by weight of the total resin content, including unsaturated polymer, cross-linkable monomer and liquid saturated polyester.

17. Use according to any one of claims 10 to 16, in the moulding of fibre reinforced plastics.

18. Use according to any one of claims 10 to 16, in the preparation of an adhesive.

19. Use according to any one of claims 10 to 16, in the preparation of a gap filler.

20. Use according to any one of claims 10 to 19, wherein the resin composition additionally contains an accelerator.

21. Use according to claim 20, wherein the accelerator is an amine and the catalyst is benzoyl peroxide.

22. Use according to claim 21, wherein the amine accelerator is epoxy p-toluidine.

23. Use according to claim 20, wherein the accelerator is cobalt octoate and the catalyst is methyl ethyl ketone peroxide.

24. A two-pack kit for providing a free radical curable resin composition containing a free radical catalyst, which kit comprises a first pack containing a catalyst composition and a second pack containing a resin composition;
the said catalyst composition being a catalyst composition free from free radical curable resin and comprising:
(1) a free radical catalyst and
(2) a liquid saturated polyester
(a) comprising units derived from
(i) a C₃₋₁₂ polycarboxylic acid or reactive derivative thereof; and
(ii) a C₂₋₁₂ polyol or reactive derivative thereof; and
(b) having a weight average molecular weight of from 500 to 20,000; and
the said resin composition being a free radical curable resin composition free from free radical catalyst; and
the said liquid saturated polyester of the said catalyst composition being present, in the two-pack kit, in an amount, by weight of the total weight of the liquid saturated polyester in the first pack and resin component of the said resin composition in the second pack, of from 0.5 to 15 weight %.

25. A two-pack kit according to claim 24, comprising an applicator for simultaneous application of the said catalyst and resin compositions from the said respective first and second packs, which applicator comprises a cartridge and which cartridge comprises a first piston casing defining a first chamber providing the first pack containing the said catalyst composition, a second piston casing longitudinally coextensive with the first piston casing and defining a second chamber providing the second pack containing the said resin composition, separately from the catalyst composition, each of the said first and second piston casings being closed at a respective axial end thereof defining a closed axial end of the cartridge but having at the said closed axial ends respective apertures for allowing egress of the said catalyst and resin compositions from the respective first and second chambers, the applicator additionally comprising a pair of piston elements each associated with a respective one of the said first and second chambers and disposed at a respective axial end thereof remote from the said closed axial end to force the said catalyst and resin compositions out of the said first and second chambers through the said apertures.

26. A two-pack kit according to claim 25, wherein the first piston casing is a hollow pipe defining the first chamber and the second piston casing is an outer housing within which housing the hollow pipe is disposed longitudinally relative to the housing, the outer housing and hollow pipe thereby defining together the second chamber.

27. A two-pack kit according to claim 25 or claim 26, wherein the applicator additionally comprises a mixing chamber in fluid connection with each of the apertures provided at the respective closed axial ends of the first and second piston casings to allow mixing of the catalyst and resin composition prior to dispensation thereof.

28. A two-pack kit according to any one of claims 24 to 27, wherein the ratio by volume of the resin composition: catalyst composition is from 1:1 to 15:1.

## Patentansprüche

**1.** Katalysatorzusammensetzung zum Härten einer radikalisch härtbaren Harzzusammensetzung, wobei die Katalysatorzusammensetzung frei vom radikalisch härtbarem Harz ist und Folgendes umfasst:
(1) einen radikalischen Katalysator und
(2) einen flüssigen gesättigten Polyester
(a) umfassend Einheiten, die herrühren von
(i) einer C₃₋₁₂-Polycarbonsäure oder einem reaktiven Derivat davon; und
(ii) einem C₂₋₁₂-Polyol oder einem reaktiven Derivat davon; und
(b) mit einem gewichtsmittleren Molekulargewicht von 500 bis 20.000.

**2.** Katalysatorzusammensetzung nach Anspruch 1, worin der flüssige gesättigte Polyester ein gewichtsmittleres Molekulargewicht von 2.000 bis 10.000 aufweist.

**3.** Katalysatorzusammensetzung nach Anspruch 1 oder 2, worin der flüssige gesättigte Polyester ein Poly(1,3-butandioladipat) ist.

**4.** Katalysatorzusammensetzung nach Anspruch 3, worin das Poly(1,3-butandioladipat) ein gewichtsmittleres Molekulargewicht Mw von 5.000 bis 6.000 aufweist.

**5.** Katalysatorzusammensetzung nach einem der vorangegangenen Ansprüche, worin der Katalysator ein organisches Peroxid oder Perketal ist.

**6.** Katalysatorzusammensetzung nach Anspruch 5, worin der Katalysator Benzoylperoxid ist.

**7.** Katalysatorzusammensetzung nach Anspruch 5, worin der Katalysator Methylethylketonperoxid ist.

**8.** Katalysatorzusammensetzung nach einem der vorangegangenen Ansprüche, worin der Katalysator in der Katalysatorzusammensetzung in einer Menge von 0,5 bis 60 Gew.-% der gesamten Katalysatorzusammensetzung enthalten ist.

**9.** Katalysatorzusammensetzung nach Anspruch 8, worin der Katalysator in einer Menge von 5 bis 15 Gew.-% der gesamten Katalysatorzusammensetzung enthalten ist.

**10.** Verwendung einer Katalysatorzusammensetzung, die vor der Verwendung frei von radikalisch härtbarem Harz ist und Folgendes umfasst:
(1) einen radikalischen Katalysator und
(2) einen flüssigen gesättigten Polyester
(a) umfassend Einheiten, die herrühren von
(i) einer C₃₋₁₂-Polycarbonsäure oder einem reaktiven Derivat davon; und
(ii) einem C₂₋₁₂-Polyol oder einem reaktiven Derivat davon; und
(b) mit einem gewichtsmittleren Molekulargewicht von 500 bis 20.000, zum Härten einer radikalisch härtbaren Harzzusammensetzung.

**11.** Verwendung nach Anspruch 10, worin die radikalisch härtbare Harzzusammensetzung ein ethylenisch ungesättigtes Polymer und ein damit vernetzbares Monomer umfasst.

**12.** Verwendung nach Anspruch 10 oder 11, worin das ungesättigte Polymer ein Polyurethan mit Acrylat-Endgruppen ist.

**14.** Verwendung nach Anspruch 10 oder 11, worin das ungesättigte Polymer ein Poly(vinylester) ist.

**15.** Verwendung nach einem der Ansprüche 11 bis 14, worin das vernetzbare Monomer Styrol ist.

**16.** Verwendung nach einem der Ansprüche 11 bis 15, worin das vernetzbare Monomer in einer Menge von 25 bis 50 Gew.-% des gesamten Harzgehalts, einschließlich ungesättigtes Polymer, vernetzbares Monomer und flüssiger gesättigter Polyester, vorliegt.

**17.** Verwendung nach einem der Ansprüche 10 bis 16 beim Formen von faserverstärktem Kunststoff.

**18.** Verwendung nach einem der Ansprüche 10 bis 16 bei der Herstellung eines Klebers.

**19.** Verwendung nach einem der Ansprüche 10 bis 16 bei der Herstellung eines Fugenkitts.

**20.** Verwendung nach einem der Ansprüche 10 bis 19, worin die Harzzusammensetzung zusätzlich einen Beschleuniger enthält.

**21.** Verwendung nach Anspruch 20, worin der Beschleuniger ein Amin ist und der Katalysator Benzoylperoxid ist.

**22.** Verwendung nach Anspruch 21, worin der Amin-Beschleuniger Epoxy-p-toluidin ist.

**23.** Verwendung nach Anspruch 20, worin der Beschleuniger Kobaltoctoat ist und der Katalysator Methylethylketonperoxid ist.

**24.** Set aus zwei Packungen zum Bereitstellen einer radikalisch härtbaren Harzzusammensetzung, die einen radikalischen Katalysator enthält, wobei das Set eine erste Packung, die eine Katalysatorzusammensetzung enthält, und eine zweite Packung umfasst, das eine Harzzusammensetzung enthält;
wobei die Katalysatorzusammensetzung eine Katalysatorzusammensetzung ist, die frei von radikalisch härtbarem Harz ist und Folgendes umfasst:
(1) einen radikalischen Katalysator und
(2) einen flüssigen gesättigten Polyester
(a) umfassend Einheiten, die herrühren von
(i) einer C₃₋₁₂-Polycarbonsäure oder einem reaktiven Derivat davon; und
(ii) einem C₂₋₁₂-Polyol oder einem reaktiven Derivat davon; und
(b) mit einem gewichtsmittleren Molekulargewicht von 500 bis 20.000,
wobei die Harzzusammensetzung eine radikalisch härtbare Harzzusammensetzung ist, die frei von radikalischem Katalysator ist; und
der flüssige gesättigte Polyester der Katalysatorzusammensetzung im Set aus zwei Packungen in einer Menge, bezogen auf das Gesamtgewicht des flüssigen gesättigten Polyesters in der ersten Packung und der Harzkomponente der Harzzusammensetzung in der zweiten Packung, von 0,5 bis 15 Gew.-% enthalten ist.

**25.** Set aus zwei Packungen nach Anspruch 24, umfassend einen Applikator zum gleichzeitigen Aufbringen der Katalysator- und der Harzzusammensetzung aus der ersten bzw. der zweiten Packung, wobei der Applikator eine Patrone umfasst und wobei die Patrone Folgendes umfasst: ein erstes Kolbengehäuse, das eine erste Kammer definiert, welche die erste, die Katalysatorzusammensetzung enthaltende Packung bildet, ein zweites Kolbengehäuse, das in Längsrichtung die gleiche Erstreckung wie das erste Kolbengehäuse aufweist und eine zweite Kammer definiert, welche die zweite, die Harzzusammensetzung enthaltende Packung bildet, die getrennt von der Katalysatorzusammensetzung ist, wobei das erste und das zweite Kolbengehäuse beide an einem jeweiligen axialen Ende davon geschlossen sind, wodurch ein geschlossenes axiales Ende der Patrone definiert wird, aber an den geschlossenen axialen Enden jeweilige Öffnungen aufweisen, um das Austreten der Katalysator- und der Harzzusammensetzung aus der ersten bzw. der zweiten Kammer zu ermöglichen, wobei der Applikator zusätzlich ein Paar Kolbenelemente umfasst, die jeweils einer von erster und zweiter Kammer zugeordnet sind und jeweils an einem vom geschlossenen axialen Ende entfernten, axialen Ende davon angeordnet sind, um die Katalysator- und die Harzzusammensetzung durch die Öffnungen aus der ersten und der zweiten Kammer zu drängen.

**26.** Set aus zwei Packungen nach Anspruch 25, worin das erste Kolbengehäuse eine Hohlröhre ist, das die erste Kammer definiert, und das zweite Kolbengehäuse ein äußeres Gehäuse ist, in welchem Gehäuse die Hohlröhre in Längsrichtung in Bezug auf das Gehäuse angeordnet ist, wodurch das äußere Gehäuse und die Hohlröhre gemeinsam die zweite Kammer definieren.

**27.** Set aus zwei Packungen nach Anspruch 25 oder 26, worin der Applikator zusätzlich eine Mischkammer in Fluidverbindung mit jeder der Öffnungen umfasst, die an den jeweiligen geschlossenen axialen Enden des ersten und des zweiten Kolbengehäuses vorgesehen sind, um das Mischen der Katalysator- und der Harzzusammensetzung vor deren Abgabe zu ermöglichen.

**28.** Set aus zwei Packungen nach einem der Ansprüche 24 bis 27, worin das Volumsverhältnis zwischen der Harzzusammensetzung und der Katalysatorzusammensetzung 1:1 bis 15:1 beträgt.

## Revendications

1. Composition catalytique pour traiter une composition de résine durcissable par radical libre, laquelle composition catalytique est exempte de résine durcissable de façon radicalaire et comprend :
(1) un catalyseur de radical libre et
(2) un polyester saturé liquide
a) comprenant des motifs issus de
(i) un acide polycarboxylique en C₃₋₁₂ ou son dérivé réactif ; et
(ii) un polyol en C₂₋₁₂ ou son dérivé réactif ; et
(b) ayant un poids moléculaire moyen en poids de 500 à 20.000.

2. Composition catalytique selon la revendication 1, dans laquelle le polyester saturé liquide a un poids moléculaire moyen en poids de 2.000 à 10.000.

3. Composition catalytique selon la revendication 1 ou la revendication 2, dans lequel le polyester saturé liquide est un poly(1,3-butanediol-adipate).

4. Composition catalytique selon la revendication 3, dans laquelle le poly(1,3-butanediol-adipate) a un poids moléculaire moyen en poids de 5.000 à 6.000.

5. Composition catalytique selon l'une quelconque des revendications précédentes, dans laquelle le catalyseur est un peroxyde organique ou un percétal.

6. Composition catalytique selon la revendication 5, dans laquelle le catalyseur est le peroxyde de benzoyle.

7. Composition catalytique selon la revendication 5, dans laquelle le catalyseur est le peroxyde de méthyléthycétone.

8. Composition catalytique selon l'une quelconque des revendications précédentes, dans laquelle le catalyseur est présent dans la composition catalytique dans une quantité de 0,5 à 60% en poids de la composition catalytique totale.

9. Composition catalytique selon la revendication 8, dans laquelle le catalyseur est présent dans une quantité de 5 à 15% en poids de la composition catalytique totale.

10. Utilisation, pour traiter une composition de résine durcissable par radical libre, d'une composition catalytique qui, avant utilisation, est exempte de résine durcissable par radical libre et comprend :
(1) un catalyseur radicalaire et
(2) un polyester saturé liquide
(a) comprenant des motifs issus de
(i) un acide polycarboxylique en C₃₋₁₂ ou son dérivé réactif ; et
(ii) un polyol en C₂₋₁₂ ou son dérivé réactif ; et
(b) ayant un poids moléculaire moyen en poids de 500 à 20.000.

11. Utilisation selon la revendication 10, dans laquelle la composition de résine durcissable par radical libre comprend un polymère insaturé éthylèniquement et un monomère réticulable avec cela.

12. Utilisation selon la revendication 10 ou la revendication 11, dans laquelle ledit polymère insaturé éthylèniquement est un polyester insaturé.

13. Utilisation selon la revendication 10 ou la revendication 11, dans laquelle ledit polymère insaturé est un polyuréthane à terminaison acrylate.

14. Utilisation selon la revendication 10 ou la revendication 11, dans laquelle ledit polymère insaturé est un poly(vinyl ester).

15. Utilisation selon l'une quelconque des revendications 11 à 14, dans laquelle le monomère réticulable est du styrène.

16. Utilisation selon l'une quelconque des revendications 11 à 15, dans laquelle le monomère réticulable est présent dans une quantité de 25 à 50% en poids de la teneur total de résine comprenant le polymère insaturé, le monomère réticulable et le polyester saturé liquide.

17. Utilisation selon l'une quelconque des revendications 10 à 16, dans le moulage de matière plastique renforcée de fibres de verre.

18. Utilisation selon l'une quelconque des revendications 10 à 16, dans la préparation d'un adhésif.

19. Utilisation selon l'une quelconque des revendications 10 à 16, dans la préparation d'une matière de remplissage.

20. Utilisation selon l'une quelconque des revendications 10 à 19, dans laquelle la composition de résine contient en plus un accélérateur.

21. Utilisation selon la revendication 20, dans laquelle l'accélérateur est une amine et le catalyseur est le peroxyde de benzoyle.

22. Utilisation selon la revendication 21, dans laquelle l'accélérateur amine est l'époxy-p-toluidine.

23. Utilisation selon la revendication 20, dans laquelle l'accélérateur amine est l'octoate de cobalt et le catalyseur est le peroxyde de méthyléthylcétone.

24. Trousse à deux sachets pour fournir une composition de résine durcissable par radical libre contenant un catalyseur de radical libre, laquelle trousse comprend un premier sachet contenant une composition catalytique et un second sachet contenant une composition de résine ;
ladite composition catalytique étant une composition catalytique exempte de résine durcissable par radical libre et comprenant :
(1) un catalyseur de radical libre et
(2) un polyester saturé liquide
(a) comprenant des motifs issus de
(i) un acide polycarboxylique en C₃₋₁₂ ou son dérivé réactif ; et
(ii) un polyol en C₂₋₁₂ ou son dérivé réactif ; et
(b) ayant un poids moléculaire moyen en poids de 500 à 20.000 ; et
ladite composition de résine étant une composition de résine durcissable par radical libre exempte de catalyseur de radical libre ; et
ledit polyester saturé liquide de ladite composition catalytique étant présent, dans la trousse de deux sachets, dans une quantité, en poids de poids total de polyester saturé liquide dans le premier sachet et du composant de résine de ladite composition de résine dans le second sachet, de 0,5 à 15% en poids.

25. Trousse à deux sachets selon la revendication 24, comprenant un applicateur pour l'application simultanée desdites compositions catalytique et de résine à partir desdits premier et second sachets respectifs, lequel applicateur comprend une cartouche et laquelle cartouche comprend un premier corps du piston définissant un premier compartiment fournissant le premier sachet contenant ladite composition catalytique, un second corps du piston de même étendue longitudinale que le premier corps du piston et définissant un second compartiment fournissant le second sachet contenant ladite composition de résine, séparément de la composition catalytique, chacun desdits premier et second corps du piston étant fermé à son extrémité axiale respective définissant une extrémité axiale fermée de la cartouche mais ayant auxdites extrémités axiales fermées, des ouvertures respectives pour permettre la sortie desdites compositions catalytique et de résine des premier et second compartiments respectifs, l'applicateur comprenant en outre une paire d'éléments formant piston, chacun associé respectivement avec un desdits premier et second compartiments et placé à une extrémité axiale de cela éloignée de ladite extrémité axiale fermée pour forcer lesdites compositions catalytique et de résine à sortir desdits premier et second compartiments au travers desdites ouvertures.

26. Trousse à deux sachets selon la revendication 25, dans laquelle le premier corps du piston est un tube creux définissant le premier compartiment et le deuxième corps du piston est un boîtier extérieur à l'intérieur duquel boîtier, le tube creux est placé longitudinalement par rapport au boîtier, le boîtier extérieur et le tube creux définissant ainsi ensemble le second compartiment.

27. Trousse à deux sachets selon la revendication 25 ou la revendication 26, dans laquelle l'applicateur comprend en outre un compartiment de mélange en liaison liquide avec chacune des ouvertures fournies aux extrémités axiales fermées respectives des premier et second corps du piston pour permettre le mélange de la composition catalytique et de résine avant sa distribution.

28. Trousse à deux sachets selon l'une quelconque des revendications 24 à 27, dans lequel le rapport en volume de la composition de résine/ composition catalytique est de 1:1 à 15:1.
